# EUROPÄISCHE PATENTSCHRIFT

(11) **EP 3 573 772 B1**
(45) Veröffentlichungstag und Bekanntmachung des Hinweises auf die Patenterteilung: **03.03.2021**
(21) Anmeldenummer: 18700769.5
(22) Anmeldetag: 22.01.2018
(51) Int. Cl.: B21B 1/46, B21B 37/74

(54) **GIESSWALZANLAGE UND VERFAHREN ZUM BEHANDELN EINES WERKSTÜCKS MITTELS EINER SOLCHEN**
CASTING ROLLING LINE AND METHOD FOR TREATING A WORKPIECE WITH SAME
INSTALLATION DE COULÉE ET PROCÉDÉ DE TRAITEMENT D'UNE PIÈCE USINÉE À L'AIDE DE CELLE-CI

(30) Priorität: 24.01.2017 EP 17152828
(43) Veröffentlichungstag der Anmeldung: 04.12.2019
(73) Patentinhaber: Primetals Technologies Austria GmbH, 4031 Linz (AT)
(72) Erfinder: PFATSCHBACHER, Thomas, 4202 Kirchschlag (AT); BRAGIN, Sergey, 4020 Linz (AT)
(74) Vertreter: Metals@Linz
(86) Internationale Anmeldenummer: PCT/EP2018/051404
(87) Internationale Veröffentlichungsnummer: WO 2018/138038

(56) Entgegenhaltungen:
- EP-A1- 3 025 799
- WO-A1-2014/177664
- WO-A2-2004/108971
- GB-A- 2 163 985

## Beschreibung

Die Erfindung betrifft eine Gießwalzanlage sowie eine Verfahren zum Behandeln eines Werkstücks mittels einer solchen Gießwalzanlage.

Moderne Gießwalzanlagen umfassen eine Gießanlage zum Stranggießen eines Werkstückes, beispielsweise eines Bandes bzw. eines Langprodukts, im Anschluss daran, beispielsweise drei, Walzgerüste zu einer Reduzierung einer (Band-)Dicke des stranggegossenen Werkstückes, einen, beispielsweise induktiven, Erhitzer (Anmerkung: ein induktiver Erhitzer muss aber nicht sein) zur Erwärmung des Werkstückes, eine, beispielsweise fünfgerüstige, Fertig- bzw. Endwalzstraße zur weiteren Reduzierung der (Band-)Dicke des Werkstückes, eine Kühlstrecke zu einer Abkühlung des Werkstückes und nach dieser eine Aufwickelvorrichtung zum Aufwickeln des Werkstücks, beispielsweise einen Haspel, auf welchem das Werkstück zu Bunden (Coils) gewickelt wird.

Solche Gießwalzanlagen, bei welchen der Gießprozess und der Walzprozess gekoppelt sind, können im Endlos-Modus arbeiten, d.h. das Werkstück durchläuft - in einer Werkstückförderrichtung bzw. (Band-)Durchlaufrichtung - die Anlage (von der Gießanlage bis vor dem Haspel) ohne, dass es während des Durchlaufens in der ESP-Anlage durchtrennt wird (sogenannte ESP-Anlagen, wobei das Akronym ESP für "Endless Strip Production" steht), oder in einem Batch-Betrieb, wobei hier der Gießprozess über einen Pufferspeicher mit dem Walzprozess gekoppelt ist. Anmerkung: "kann im Endlos - Mode" arbeiten ist richtig.

Da bei einer solchen ESP-Anlage im Endlos-Modus das Werkstück nicht getrennt wird, hat eine Walzgeschwindigkeit beim Fertig- bzw. Endwalzen einen festen Zusammenhang mit einem Massenfluss beim Stranggießen.

Durch die Abhängigkeit einer Endwalztemperatur beim Fertig- bzw. Endwalzen von der dortigen Walzgeschwindigkeit wird damit die Endwalztemperatur ebenfalls vom Massenfluss beim Stranggießen limitiert.

Werden durch die Endwalztemperatur beim Fertig- bzw. Endwalzen unterschiedliche physikalische Eigenschaften beim bearbeiteten Werkstück erreicht, insbesondere über die dadurch einstellbaren metallurgischen Gefügestrukturen im Werkstück, ergibt sich damit so auch eine Einschränkung bei durch diesen Endloswalzprozess produzierbaren Stahlsorten.

Aus der WO 2004/108971 A2 ist eine gattungsgemässe Gießwalzanlage bekannt, bei welcher mehrere Intensiv-Kühlboxen innerhalb einer einer Fertigwalzstraße nachgeordneten Kühlstrecke angeordnet sind.

Eine Aufgabe der Erfindung ist es, die oben aufgeführten Nachteile zu überwinden und insbesondere eine Gießwalzanlage bereitzustellen, die vielseitig einsetzbar ist, unter deren Verwendung ein Werkstück mit einer metallurgisch vorteilhaften Gefügestruktur erzielt werden kann und mittels der unterschiedlichste Stahlsorten produziert werden können.

Eine weitere Aufgabe der Erfindung ist es, ein Verfahren bereitzustellen, das ermöglicht, ein Werkstück mit einer metallurgisch vorteilhaften Gefügestruktur herzustellen und zudem den Betrieb der Gießwalzanlage insbesondere auch im Endlos-Modus gestattet.

Diese Aufgaben werden erfindungsgemäß gelöst durch eine Gießwalzanlage und durch ein Verfahren mit den Merkmalen des jeweiligen unabhängigen Anspruchs. Günstige Ausgestaltungen und Vorteile der Erfindung ergeben sich auch aus den weiteren Ansprüchen und der Beschreibung.

Die Erfindung geht aus von einer Gießwalzanlage, beispielsweise einer sogenannten ESP-Anlage, mit zumindest einer Fertigwalzstraße aufweisend zumindest ein letztes Walzgerüst und mit einer der Fertigwalzstraße nachgelagerten Kühlvorrichtung.

Dabei können sich Begriffe wie "nach" bzw. "nachgelagert", "vor" bzw. "vorgelagert", "hinter" bzw. "hintereinander" u.ä. in Bezug auf eine Werkstückförderrichtung eines Werkstückes durch Gießwalzanlage, d.h. einer Bewegungsrichtung des Werkstückes durch Gießwalzanlage, verstehen. Kurz vereinfacht und anschaulich ausgedrückt, Komponenten bzw. Anlagenteile der Gießwalzanlage sind - in der Werkstückförderrichtung der Gießwalzanlage bzw. der Werkstückbewegungsrichtung durch die Gießwalzanlage - hintereinander bzw. nacheinander bei der Gießwalzanlage angeordnet.

So soll in diesem Zusammenhang unter "nachgelagert" verstanden werden, dass bezogen auf die Werkstückförderrichtung der Gießwalzanlage bzw. gezogen auf die Bewegungsrichtung des Werkstückes durch die Gießwalzanlage die Kühlvorrichtung nach der Fertigwalzstraße bzw. deren letzten Walzgerüst angeordnet ist. Analog hierzu kann "vorgelagert" dann dahingehend verstanden werden, dass - bezogen auf die Werkstückförderrichtung der Gießwalzanlage bzw. bezogen auf die Bewegungsrichtung des Werkstückes durch die Gießwalzanlage - die Fertigwalzstraße bzw. deren letzten Walzgerüst vor der Kühlvorrichtung angeordnet ist.

Es wird vorgeschlagen, dass die Gießwalzanlage zumindest ein Temperaturstellglied - zum Erhöhen oder zumindest im Wesentlichen zum konstant Halten einer Temperatur eines Objekts, insbesondere eines Werkstückes, um einem Abkühlen des Objekts bzw. des Werkstücks entgegenzuwirken, - aufweist, welches Temperaturstellglied nach dem letzten Walzgerüst und vor der Kühlvorrichtung angeordnet ist und/oder welches nach dem letzten Walzgerüst und (weiter auch) nach der Kühlvorrichtung angeordnet ist. Vorteilhafterweise ist das - zumindest eine - Temperaturstellglied zwischen dem letzten Walzgerüst und der Kühlvorrichtung angeordnet.

Unter einem Temperaturstellglied kann dabei ein Element bzw. Vorrichtung verstanden werden, das bzw. die geeignet ist, an seinem bzw. ihrem Wirkort eine Temperatur eines Objekts, insbesondere des Werkstückes, zu erhöhen oder zumindest im Wesentlichen konstant zu halten (d.h., einem Abkühlen entgegenzuwirken), wie beispielsweise ein Ofen, insbesondere ein Kammerofen, ein Gasbrenner, eine induktiven Wärmequelle (Ofen, Booster) oder eine Isolation, insbesondere eine isolierende Abdeckung oder ein isolierendes Panel.

D.h., bei diesem Temperaturstellglied handelt es sich insbesondere um ein "aktives" Glied/Element bzw. "aktive" Ein- /Vorrichtung, welches bzw. welche, beispielsweise ansteuerbar, aktiv dem Objekt bzw. dem Werkstück Wärmeenergie zuführt.

Grundsätzlich können auch je Position mehrere Temperaturstellglieder oder ein oder mehrere Temperaturstellglieder vor und nach der Kühlvorrichtung vorgesehen sein.

Durch die erfindungsgemäße Anordnung kann ein Entfestigungsprozess, ein Kornwachstum und eine Vergröberung von Ausscheidungen im Gefüge des Werkstückes - gezielt - induziert werden. Hierdurch kann dann vorteilhafterweise ein Werkstück, wie beispielsweise ein Metallband, mit einer gewollten, d.h. metallurgisch vorteilhaften, Gefügestruktur erzielt werden. Dies ermöglicht so die Produktion von einer großen Bandbreite von unterschiedlichen Stahlsorten, wie beispielsweise von Elektroblechen.

Ferner können hierdurch auch (Gefüge-)Strukturen und physikalische Eigenschaften bei dem Werkstück für (gegebenenfalls) weitere Bearbeitungsstufen erreicht bzw. eingestellt werden.

Ebenso wird der Betrieb der erfindungsgemäßen Gießwalzanlage in allen Modi, insbesondere im Endlos-Modus, wie auch im Batch-Betrieb, gestattet.

Durch die erfindungsgemäße Gießwalzanlage können so insbesondere Elektrobleche im Endlos-Modus hergestellt werden. Dies ist möglich, da durch die Verwendung des Temperaturstellgliedes im Werkstück - nach dem letzten Walzgerüst - wieder bzw. eine nochmalige Temperaturerhöhung durchgeführt werden kann, wodurch vorteilhaft eine grobe Körnung des Materials und grobe Ausscheidungen erreicht werden können.

Nach einer Weiterbildung kann vorgesehenen sein, dass das Temperaturstellglied eine Heizvorrichtung ist, wodurch besonders einfach Bedingungen, welche zu metallurgisch vorteilhaften Gefügestrukturen führen, wie beispielsweise (nochmals) erhöhte/hohe Temperaturen im Werkstück , bereitgestellt werden.

Gemäß einer bevorzugten Ausgestaltung der Erfindung weist die Heizvorrichtung einen induktiven Ofen auf. Hierdurch kann eine Temperaturerhöhung besonders schnell und flexibel erfolgen ("impulsartige Temperatureinbringung in das Werkstück", "Booster"). Hierbei kann ein solcher induktiver Ofen bzw. Booster oder es können mehrere solche induktive Öfen bzw. Booster (hintereinander) vorgesehen sein.

Alternativ und/oder zusätzlich kann das Temperaturstellglied eine Wärmespeichervorrichtung aufweisen. Hierdurch kann eine energieschonende Ausgestaltung bereitgestellt werden.

Unter einer "Wärmespeichervorrichtung" soll eine Vorrichtung verstanden werden, die eine Temperatur des Werkstückes (im Wesentlichen) konstant hält und/oder einer Abkühlung desselben entgegenwirkt bzw. eine solche verhindern kann.

Die Wärmespeichervorrichtung kann von jedem dem Fachmann für anwendbar erachteten Element oder Elementengruppe gebildet sein, wie beispielsweise einer Umhausung, einer Abdeckung oder einem Panel. Bevorzugterweise weist die Wärmespeichervorrichtung (wärme-)isolierende Eigenschaften auf.

Vorteilhafterweise weist die Wärmespeichervorrichtung zumindest ein Panel auf, wodurch diese konstruktiv einfach ausgeführt ist und eingesetzt werden kann. Insbesondere ist die Wärmespeichervorrichtung ein schwenkbares - isolierendes - Panel, wodurch die Temperatur besonders effektiv (annähernd) konstant gehalten werden kann. Das schwenkbare Panel kann beispielsweise um/über das Werkstück bzw. einen das Werkstück führenden Anlagenabschnitt klappbar ausgeführt sein.

Bei einer vorteilhaften Weiterbildung ist vorgesehen, dass das Temperaturstellglied zwischen 1 Meter und 25 Metern, bevorzugt zwischen 5 Metern und 20 Metern und besonders bevorzugt zwischen 10 Metern und 15 Metern vor der Kühlvorrichtung angeordnet ist. Für diese Abstände konnte gezeigt werden, dass eine metallurgisch vorteilhafte Gefügestruktur, wie eine große Korngröße, bei/in dem Werkstück - bei realisierbaren Walzgeschwindigkeiten bzw. Werkstückgeschwindigkeiten - einstellbar ist.

Bevorzugterweise kann das Temperaturstellglied auch zwischen 0,5 Meter und 10 Meter, bevorzugt zwischen 0,5 Meter und 5 Meter und besonders bevorzugt zwischen 0,5 Meter und 2 Meter nach dem letzten Walzgerüst angeordnet sein. Auch hier konnte gezeigt werden, dass für diese Abstände eine metallurgisch vorteilhafte Gefügestruktur, wie eine große Korngröße, bei/in dem Werkstück - bei realisierbaren Walzgeschwindigkeiten bzw. Werkstückgeschwindigkeiten - einstellbar ist.

Eine effektive und schnelle Kühlung kann erfolgen, wenn die Kühlvorrichtung der Gießwalzanlage eine laminare oder turbolaminare Kühlvorrichtung oder eine Druckkühlvorrichtung ist. Hierbei kann beispielsweise Kühlflüssigkeit, wie bestimmte Kühlmittel oder auch Wasser, zur Kühlung eingesetzt werden.

Die Erfindung betrifft weiterhin ein Verfahren zum Behandeln eines Werkstückes in einer erfindungsgemäßen Gießwalzanlage, also umfassend zumindest die Fertigwalzstraße aufweisend zumindest das letztes Walzgerüst, mit der der Fertigwalzstraße nachgelagerten Kühlvorrichtung und mit dem zumindest einen Temperaturstellglied, welches nach dem letzten Walzgerüst und vor der Kühlvorrichtung angeordnet ist und/oder welches nach dem letzten Walzgerüst und (weiter auch) nach der Kühlvorrichtung angeordnet ist.

Es wird vorgeschlagen, dass das Werkstück unter Verwendung des Temperaturstellgliedes (wärme-)behandelt wird, insbesondere dessen Temperatur, insbesondere aktiv, erhöht - oder (annähernd) "gehalten" wird.

Durch das erfindungsgemäße Verfahren kann ein Entfestigungsprozess, ein Kornwachstum und eine Vergröberung von Ausscheidungen im Gefüge des Werkstückes - gezielt - induziert werden. Hierdurch kann dann vorteilhafterweise ein Werkstück, wie beispielsweise ein Langprodukt oder ein Metallband, mit einer gewollten, d.h. metallurgisch vorteilhaften, Gefügestruktur erzielt werden. Dies ermöglicht so die Produktion von einer großen Bandbreite von unterschiedlichen Stahlsorten, wie beispielsweise von Elektroblechen.

Ferner können hierdurch auch (Gefüge-)Strukturen und physikalische Eigenschaften bei dem Werkstück für (gegebenenfalls) weitere Bearbeitungsstufen erreicht bzw. eingestellt werden.

Ebenso wird der Betrieb der erfindungsgemäßen Gießwalzanlage in allen Modi, insbesondere im Endlos-Modus, wie auch im Batch-Betrieb, gestattet.

Durch das erfindungsgemäße Verfahren können so insbesondere Elektrobleche im Endlos-Modus hergestellt werden. Dies ist möglich, da durch die Behandlung durch das Temperaturstellgliedes im Werkstück - nach dem letzten Walzgerüst -wieder bzw. eine nochmalige Temperaturerhöhung durchgeführt werden kann, wodurch vorteilhaft eine grobe Körnung des Materials und grobe Ausscheidungen erreicht werden können.

Gemäß einer bevorzugten Ausgestaltung der Erfindung ist das Temperaturstellglied nach dem letzten Walzgerüst und vor der Kühlvorrichtung angeordnet - und das Werkstück wird unter Verwendung des Temperaturstellgliedes behandelt. Hierdurch lassen sich eine akkumulierte Dehnung im Werkstück nach dem Walzen und eine erhöhte Temperatur im Werkstück wegen des Temperaturstellgliedes erreichen, welche eine Bildung der groben Körnung und die Vergröberung der Ausscheidungen beschleunigen.

Alternativ ist das Temperaturstellglied nach dem letzten Walzgerüst und nach der Kühlvorrichtung angeordnet - und das Werkstück wird unter Verwendung des Temperaturstellgliedes behandelt. Unter Umständen kann damit ebenfalls noch einmal eine Kornvergröberung an der Wickelvorrichtung bzw. am Haspel erzielt werden, die sich positiv in den weiteren Verarbeitungsschritten auf die elektromagnetischen Eigenschaften auswirkt.

Vorteilhafterweise ist das Temperaturstellglied eine Heizvorrichtung - und das Werkstück wird unter Verwendung der Heizvorrichtung um 10°C bis 150°C, bevorzugt um 20°C bis 120°C und besonders bevorzugt um 50°C bis 100°C erwärmt. Mit diesen Temperaturanstiegen kann erreicht werden, dass - bei realisierbaren Walz- bzw. Werkstückgeschwindigkeiten - nach dem letzten Walzgerüst das Werkstück (nochmals) erwärmbar ist, wodurch eine Kornvergröberung (und grobe Ausscheidungen) induziert wird, welche sich positiv auf die Materialeigenschaften (speziell elektromagnetischen Eigenschaften) nach Folgearbeitsschritten im Werkstück auswirkt.

Bezieht sich der Temperaturanstieg auf eine Temperatur des Werkstückes beim Austritt aus dem letzten Walzgerüst (d.h., das Temperaturstellglied bzw. die Heizvorrichtung ist nach dem letzten Walzgerüst und vor der Kühlvorrichtung angeordnet), so beträgt diese Temperatur im Regelfall ca. 790°C bis 920°C, wodurch die Temperatur des Werkstückes unter Verwendung des Temperaturstellgliedes auf ca. 800°C bis 1100°C erhöht wird.

In einer weiteren Realisierung der Erfindung ist vorgesehen, dass das Temperaturstellglied eine, insbesondere "schnell wirkende", Heizvorrichtung, beispielsweise ein induktiver Ofen, ist - und das Werkstück unter Verwendung der Heizvorrichtung zwischen 0,1 Sekunden und 10 Sekunden, bevorzugt zwischen 0,1 Sekunden und 5 Sekunden und besonders bevorzugt zwischen 0,1 Sekunden und 1 Sekunde, erwärmt wird. Diese Zeiten zeigten positive Effekte auf die eingestellten metallurgischen Gefügestrukturen.

Die (Erwärmungs-)Zeit kann dabei auch abhängig von verschiedenen Faktoren, wie beispielsweise einer Werkstückgeschwindigkeit, gewählt werden. Im Falle einer Wärmespeichervorrichtung als Temperaturstellglied beispielsweise auch von deren Länge.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Gießwalzanlage kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des Ausführungsbeispiels der Erfindung, das im Zusammenhang mit der Zeichnung näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Die Erfindung wird anhand von Ausführungsbeispielen näher erläutert, die in den Zeichnungen dargestellt sind.

Es zeigen:
- FIG 1: eine erfindungsgemäße Gießwalzanlage aufweisend eine Walzstraße mit zwei Walzgerüsten, einer Kühlvorrichtung und einer Haspelanlage,
- FIG 2: ein Diagramm, welches eine Temperatur eines Werksstücks, das in der Gießwalzanlage der Figur 1 bearbeitet wird, in Abhängigkeit von der Zeit und die Effekte einer Erwärmung und einer Kühlung des Werkstückes darstellt,
- FIG 3: ein Diagramm, welches eine Austenitkorngröße und eine Rekristallisation eines Materials des Werksstücks, das in der Gießwalzanlage der Figur 1 bearbeitet wird in Abhängigkeit von der Zeit und die Effekte einer induktiven Erwärmung und einer Kühlung des Werkstückes darstellt,
- FIG 4: eine Gießwalzanlage nach dem Stand der Technik,
- FIG 5: ein Diagramm, welches eine Temperatur eines Werksstücks, das in der Gießwalzanlage der Figur 4 bearbeitet wird in Abhängigkeit von der Zeit und den Effekt einer Kühlung des Werkstückes darstellt,
- FIG 6: ein Diagramm, welches eine Austenitkorngröße und eine Rekristallisation eines Materials des Werksstücks, das in der Gießwalzanlage der Figur 4 bearbeitet wird in Abhängigkeit von der Zeit darstellt und
- FIG 7: eine Tabelle, welche die Abhängigkeit einer Austenit-Ferrit-Umwandlung von einer Temperatur einer induktiven Erwärmung und einer Distanz zwischen der induktiven Erwärmung und einer Kühlung zweigt.

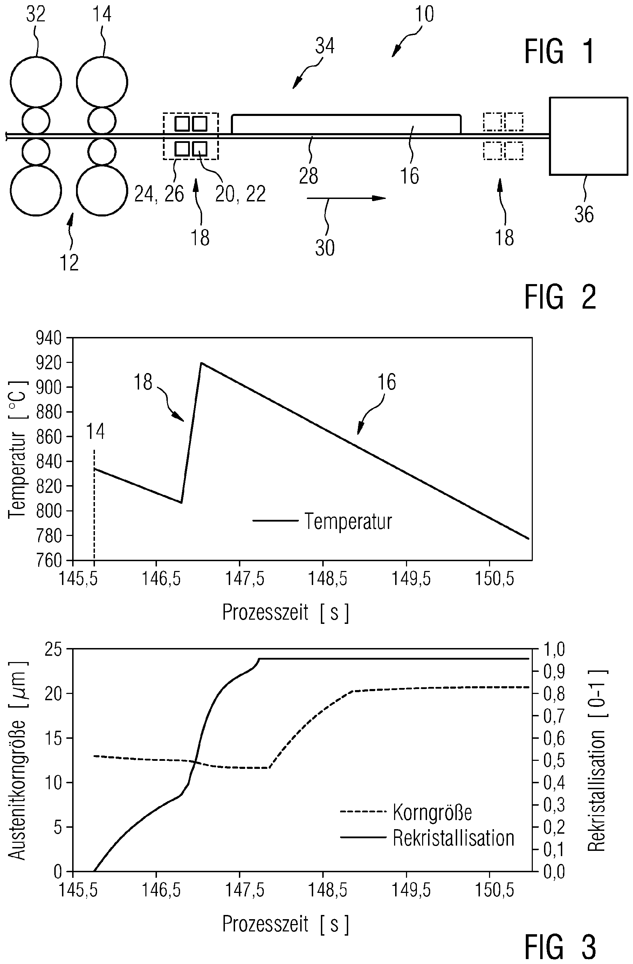

Die Figur 1 zeigt schematisch einen Teil einer Gießwalzanlage 10 in der Form einer ESP-Anlage ("Endless Strip Production").

Die Gießwalzanlage 10 umfasst - in Durchlaufrichtung/ Bewegungsrichtung 30 eines "endlosen" Werkstückes 28, wie beispielsweise eines Metallbandes, - eine Fertigwalzstraße 12 mit mehreren Walzgerüsten bzw. einem vorderen Walzgerüst 32 und einem letzten Walzgerüst 14 (es sind in FIG 1 exemplarisch zwei Walzgerüste gezeigt), ein Temperaturstellglied 18, eine Kühlstrecke 34 mit einer laminaren Kühlvorrichtung 16 und eine Haspelanlage 36.

Das Temperaturstellglied 18 ist somit zwischen dem letzten Walzgerüst 14 der Walzstraße 12 und der Kühlvorrichtung 16 angeordnet.

Das Temperaturstellglied 18 kann beispielsweise zwischen 1 Meter und 25 Meter, bevorzugt zwischen 5 Meter und 20 Meter und besonders bevorzugt zwischen 10 Meter und 15 Meter, vor der Kühlvorrichtung 16 angeordnet sein. Des Weiteren kann das Temperaturstellglied 18 zwischen 0,5 Meter und 10 Meter, bevorzugt zwischen 0,5 Meter und 5 Meter und besonders bevorzugt zwischen 0,5 Metern und 2 Meter, nach dem letzten Walzgerüst 14 angeordnet sein.

Ferner ist das Temperaturstellglied 18 als eine Heizvorrichtung 20, in der Form eines induktiven Ofens 22 (gezeigt schematisch mit beispielsweise zwei Boostern), ausgebildet und das Werkstück 28 wird durch den Ofen 22 hindurch transportiert.

Alternativ kann das Temperaturstellglied 18 auch nach der Kühlvorrichtung 16 bzw. zwischen dieser 16 und der Haspel 36 angeordnet sein.

Zudem kann an beiden Positionen, d.h. vor und nach der Kühlvorrichtung 16, ein Temperaturstellglied 18 vorgesehen sein.

Alternativ und/oder zusätzlich kann das Temperaturstellglied 18 als eine Wärmespeichervorrichtung 24 ausgebildet sein oder eine solche aufweisen.

Diese Wärmespeichervorrichtung 24 ist beispielsweise als ein isolierendes Panel 26 ausgebildet, dass um das Werkstück 28 angeordnet ist oder um dieses angeordnet werden kann. Das Panel 26 kann beispielsweise auch schwenkbar ausgeführt sein.

Gemäß einem Verfahren zum Behandeln des Werkstückes 28 in der Gießwalzanlage 10 wird also das Werkstück 28 unter Verwendung des Temperaturstellgliedes 18 behandelt - und zwar beispielsweise indem das Temperaturstellglied 18 nach dem letzten Walzgerüst 14 und vor der Kühlvorrichtung 16 angeordnet ist und das Werkstück 28 an dieser Stelle unter Verwendung des Temperaturstellgliedes 18 behandelt wird.

Alternativ und/oder zusätzlich, ist das Temperaturstellglied 18 nach dem letzten Walzgerüst 14 und nach der Kühlvorrichtung 16 angeordnet und das Werkstück 28 wird dort unter Verwendung des Temperaturstellgliedes 18 behandelt.

Im Falle der Ausgestaltung des Temperaturstellgliedes 18 als eine Heizvorrichtung 20 kann das Werkstück 28 unter Verwendung der Heizvorrichtung 20 um 10°C bis 150°C, bevorzugt um 20°C bis 120°C und besonders bevorzugt um 50°C bis 100°C, erwärmt werden. Diese Erwärmung erfolgt beispielsweise zwischen 0,1 Sekunden und 10 Sekunden, bevorzugt zwischen 0,1 Sekunden und 5 Sekunden und besonders bevorzugt zwischen 0,1 Sekunden und 1 Sekunde.

Der Effekt des Temperaturstellglieds 18 bzw. des induktiven Ofens 22 auf eine Mikrostrukturentwicklung in einem Werkstück 28 wurde simuliert. Die Ergebnisse sind in den Diagrammen der FIG 2 und FIG 3 wiedergegeben.

In der FIG 2 ist ein Diagramm darstellend eine Temperatur bzw. einen Temperaturverlauf (in °C) des Werksstückes 28, das in der Gießwalzanlage der FIG 1 bearbeitet wird, ab dem Austritt aus dem letzten Walzgerüst 14 in Abhängigkeit von der (Prozess-)Zeit (in Sekunden) gezeigt.

Der dargestellte Temperaturverlauf nach FIG 2 zeigt deutlich die (Temperatur-)Effekte im Werkstück bei einer Erwärmung durch das Temperaturstellglied 18 ("steiler Temperaturanstieg" nach "leichter Abkühlung" bei Austritt des Werkstückes aus dem letzten Walzgerüst) und einer Kühlung durch die Kühlvorrichtung 16 (sich daran anschließender "Temperaturabfall") .

FIG 3 zeigt ein Diagramm, welches eine Austenitkorngröße (in µm) und eine Rekristallisation (in Werten von 0 bis 1) im Material des Werksstückes 28 ab dem Austritt aus dem letzten Walzgerüst 14, in Abhängigkeit von der (Prozess-)Zeit (in Sekunden) darstellt (Details siehe unten).

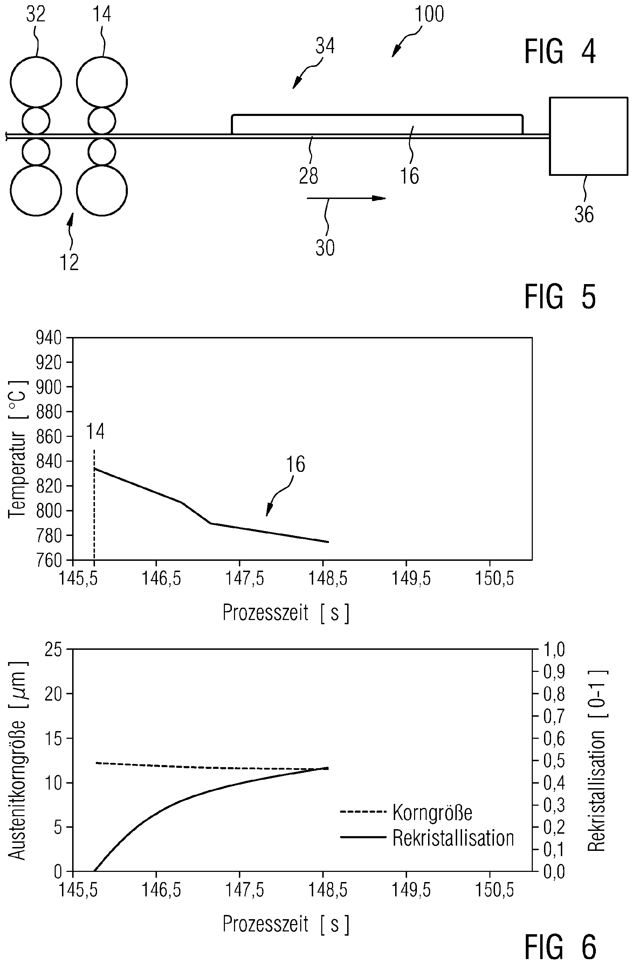

Zum Vergleich dazu wurde dieselbe Simulation an einer Gießwalzanlage 100 gemäß dem Stand der Technik, also ohne Verwendung eines Temperaturstellglieds, durchgeführt. Diese Gießwalzanlage 100 ist in FIG 4 gezeigt.

Übereinstimmende Elemente zu der erfindungsgemäßen Gießwalzanlage 10 sind mit denselben Bezugszeichen beziffert.

Die Ergebnisse wiederum sind in den Diagrammen der FIG 5 (entsprechend zu FIG 2) und FIG 6 (entsprechend zu FIG 3) wiedergegeben (Achsenauftragungen analog zu den FIG 2 und 3). Die Simulation für die Anlage des Standes der Technik wurde vor der Austenit-Ferrit-Umwandlung unterbrochen.

Wie in der FIG 5 zu sehen ist, fällt die Temperatur nach dem Austritt aus dem letzten Walzgerüst 14 nahezu konstant, wenn kein Temperaturstellglied zum Einsatz kommt. Wie in der FIG 6 zu sehen ist, wird die Mikrostruktur nach dem letzten Walzgerüst 14 nur zum Teil rekristallisiert. Die Körner werden während der Rekristallisation verfeinert. Da das Kornwachstum nur nach der Rekristallisation anfangen kann, wachsen die Austenit-Körner nicht.

Ein anderes Bild ergibt sich, wenn erfindungsgemäß ein Temperaturstellglied 18 zum Einsatz kommt. Der in FIG 2 dargestellte Temperaturverlauf zeigt nach dem Austritt aus dem letzten Walzgerüst 14 einen leichten Temperaturabfall um ca. 30°C von 840° auf 810°C. Durch die Verwendung des Temperaturstellglieds 18 bzw. des induktiven Ofens 22 für ca. 0,5 Sekunden kommt es zu einem raschen Temperaturanstieg von ca. 90°C von ca. 810°C auf ca. 920°C. Danach kommt es durch den Einsatz der Kühlvorrichtung 16 zu einem stetigen Temperaturabfall auch ca. 780°C.

Wie in FIG 3 zu sehen ist, verursacht eine Erhöhung der Temperatur auf ca. 920°C die Beendigung der Rekristallisation und des Austenitkornwachstums. Es ist gut zu sehen, dass die Erhöhung der Temperatur zwischen dem letzten Walzgerüst 14 und der laminaren Kühlvorrichtung 16 die Entfestigung der Mikrostruktur und im Wesentlichen die Vergrößerung der Mikrostruktur bewirkt.

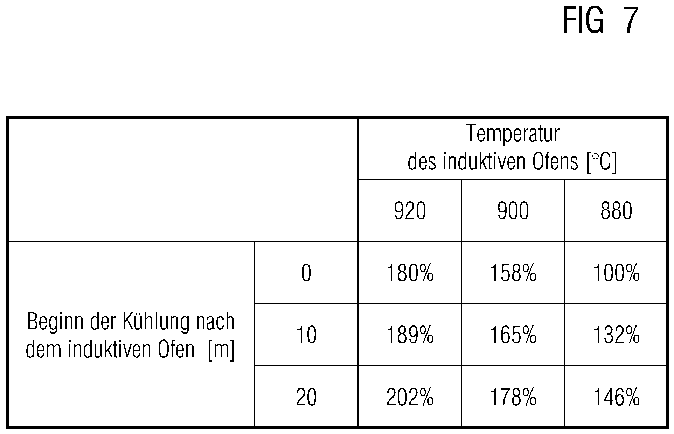

Dieser Schluss lässt sich auch aus den Werten der Tabelle der FIG 7 herleiten. Die Tabelle zeigt die Vergrößerung der Austenitkorngröße vor der Austenit-Ferrit-Umwandlung in Prozent (%), wobei 100% die Austenitkorngröße ohne induktive Erwärmung repräsentiert.

Es sind Ergebnisse zu drei unterschiedlichen Temperaturen (880°C, 900°C und 920°C) und zu drei unterschiedlichen Abständen zwischen dem Temperaturstellglied 18 und dem Beginn der Kühlung durch die Kühlvorrichtung 16 gezeigt (0 Meter, 10 Meter und 20 Meter).

Beginnt die Kühlung unmittelbar nach der Erwärmung (0 Meter) bei einer Temperatur von 880°C entspricht die Austenit-Ferrit-Umwandlung 100%; ist also gleich zu der ohne induktive Erwärmung. Der Prozentwert steigt jedoch bis auf 202% an wenn entweder die Temperatur und/oder die Distanz erhöht werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

### Bezugszeichenliste

- 10: Gießwalzanlage
- 12: Fertigwalzstraße
- 14: Walzgerüst
- 16: Kühlvorrichtung
- 18: Temperaturstellglied
- 20: Heizvorrichtung
- 22: Ofen
- 24: Wärmespeichervorrichtung
- 26: Panel
- 28: Werkstück (Metallband)
- 30: Bewegungsrichtung
- 32: Walzgerüst
- 34: Kühlstrecke
- 36: Haspelanlage
- 100: Gießwalzanlage

## Patentansprüche

1. Gießwalzanlage (10) mit zumindest einer Fertigwalzstraße (12) aufweisend zumindest ein letztes Walzgerüst (14) und mit einer der Fertigwalzstraße (12) nachgelagerten Kühlvorrichtung (16),
**gekennzeichnet durch** zumindest ein Temperaturstellglied (18) zum Erhöhen oder zumindest im Wesentlichen zum konstant Halten einer Temperatur eines Objekts, insbesondere eines Werkstückes, um einem Abkühlen entgegenzuwirken, welches Temperaturstellglied nach dem letzten Walzgerüst (14) und vor der Kühlvorrichtung (16) angeordnet ist und/oder welches nach dem letzten Walzgerüst (14) und nach der Kühlvorrichtung (16) angeordnet ist.

2. Gießwalzanlage nach Anspruch 1,
**dadurch gekennzeichnet, dass** das Temperaturstellglied (18) eine Heizvorrichtung (20) ist.

3. Gießwalzanlage nach Anspruch 2,
**dadurch gekennzeichnet, dass** die Heizvorrichtung (20) einen induktiven Ofen (22) aufweist.

4. Gießwalzanlage nach einem der vorhergehenden Ansprüche, **dadurch gekennzeichnet, dass** das Temperaturstellglied (18) eine Wärmespeichervorrichtung (24) aufweist.

5. Gießwalzanlage nach Anspruch 4,
**dadurch gekennzeichnet, dass** die Wärmespeichervorrichtung (24) zumindest ein Panel (26) aufweist, insbesondere ein schwenkbares Panel (26).

6. Gießwalzanlage nach einem der vorhergehenden Ansprüche, **dadurch gekennzeichnet, dass** das Temperaturstellglied (18) zwischen 1 Meter und 25 Metern, bevorzugt zwischen 5 Metern und 20 Metern und besonders bevorzugt zwischen 10 Metern und 15 Metern vor der Kühlvorrichtung (16) angeordnet ist.

7. Gießwalzanlage nach einem der vorhergehenden Ansprüche, **dadurch gekennzeichnet, dass** das Temperaturstellglied (18) zwischen 0,5 Meter und 10 Meter, bevorzugt zwischen 0,5 Meter und 5 Meter und besonders bevorzugt zwischen 0,5 Meter und 2 Meter nach dem letzten Walzgerüst (14) angeordnet ist.

8. Gießwalzanlage nach einem der vorhergehenden Ansprüche, **dadurch gekennzeichnet, dass** die Kühlvorrichtung (16) eine laminare oder turbolaminare Kühlvorrichtung (16) oder eine Druckkühlvorrichtung (16) ist.

9. Verfahren zum Behandeln eines Werkstückes (28) in einer Gießwalzanlage (10) nach zumindest einem der Ansprüche 1 bis 8,
**dadurch gekennzeichnet, dass** das Werkstück (28) unter Verwendung des Temperaturstellgliedes (18) behandelt wird.

10. Verfahren nach Anspruch 9,
**dadurch gekennzeichnet, dass** das Temperaturstellglied (18) nach dem letzten Walzgerüst (14) und vor der Kühlvorrichtung (16) angeordnet ist und das Werkstück (28) unter Verwendung des Temperaturstellgliedes (18) behandelt wird.

11. Verfahren nach Anspruch 9 oder 10,
**dadurch gekennzeichnet, dass** das Temperaturstellglied (18) nach dem letzten Walzgerüst (14) und nach der Kühlvorrichtung (16) angeordnet ist und das Werkstück (28) unter Verwendung des Temperaturstellgliedes (18) behandelt wird.

12. Verfahren nach einem der Ansprüche 9 bis 11,
**dadurch gekennzeichnet, dass** das Temperaturstellglied (18) eine Heizvorrichtung (20) ist und das Werkstück (28) unter Verwendung der Heizvorrichtung (20) um 10°C bis 150°C, bevorzugt um 20°C bis 120°C und besonders bevorzugt um 50°C bis 100°C, erwärmt wird.

13. Verfahren nach einem der Ansprüche 9 bis 12,
**dadurch gekennzeichnet, dass** das Temperaturstellglied (18) eine Heizvorrichtung (20) ist und das Werkstück (28) unter Verwendung der Heizvorrichtung (20) zwischen 0,1 Sekunden und 10 Sekunden, bevorzugt zwischen 0,1 Sekunden und 5 Sekunden und besonders bevorzugt zwischen 0,1 Sekunden und 1 Sekunde, erwärmt wird.

## Claims

1. Casting-rolling installation (10) with at least one finishing train (12) which has at least a last roll stand (14), and with a cooling device (16) which is arranged downstream of the finishing train (12),
**characterized by** at least one temperature adjusting element (18) for increasing or at least substantially keeping constant a temperature of an object, in particular of a workpiece, in order to counteract cooling, said temperature adjusting element being arranged after the last roll stand (14) and before the cooling device (16) and/or being arranged after the last roll stand (14) and after the cooling device (16).

2. Casting-rolling installation according to Claim 1, **characterized in that** the temperature adjusting element (18) is a heating device (20).

3. Casting-rolling installation according to Claim 2, **characterized in that** the heating device (20) has an inductive furnace (22).

4. Casting-rolling installation according to one of the preceding claims,
**characterized in that** the temperature adjusting element (18) has a heat storage device (24).

5. Casting-rolling installation according to Claim 4, **characterized in that** the heat storage device (24) has at least one panel (26), in particular a pivotable panel (26).

6. Casting-rolling installation according to one of the preceding claims,
**characterized in that** the temperature adjusting element (18) is arranged between 1 meter and 25 meters, preferably between 5 meters and 20 meters, and particularly preferably between 10 meters and 15 meters, before the cooling device (16).

7. Casting-rolling installation according to one of the preceding claims,
**characterized in that** the temperature adjusting element (18) is arranged between 0.5 meters and 10 meters, preferably between 0.5 meters and 5 meters, and particularly preferably between 0.5 meters and 2 meters, after the last roll stand (14).

8. Casting-rolling installation according to one of the preceding claims,
**characterized in that** the cooling device (16) is a laminar or turbo-laminar cooling device (16) or a pressure cooling device (16) .

9. Method for treating a workpiece (28) in a casting-rolling installation (10) according to at least one of Claims 1 to 8, **characterized in that** the workpiece (28) is treated using the temperature adjusting element (18).

10. Method according to Claim 9,
**characterized in that** the temperature adjusting element (18) is arranged after the last roll stand (14) and before the cooling device (16), and the workpiece (28) is treated using the temperature adjusting element (18).

11. Method according to Claim 9 or 10,
**characterized in that** the temperature adjusting element (18) is arranged after the last roll stand (14) and after the cooling device (16), and the workpiece (28) is treated using the temperature adjusting element (18).

12. Method according to one of Claims 9 to 11,
**characterized in that** the temperature adjusting element (18) is a heating device (20), and the workpiece (28) is heated by 10°C to 150°C, preferably by 20°C to 120°C, and particularly preferably by 50°C to 100°C, using the heating device (20).

13. Method according to one of Claims 9 to 12,
**characterized in that** the temperature adjusting element (18) is a heating device (20), and the workpiece (28) is heated for between 0.1 seconds and 10 seconds, preferably for between 0.1 seconds and 5 seconds, and particularly preferably for between 0.1 seconds and 1 second, using the heating device (20).

## Revendications

1. Installation de laminage de coulée continue (10) comprenant au moins un train de laminoir de finition (12) comprenant au moins une dernière cage de laminoir (14), et comprenant un dispositif de refroidissement (16) monté en aval du train de laminoir de finition (12),
**caractérisée par** au moins un composant de réglage de température (18) destiné à augmenter ou au moins à maintenir essentiellement constante une température d'un objet, notamment d'une pièce à travailler, pour s'opposer à un refroidissement, lequel composant de réglage de température est situé après la dernière cage de laminoir (14) et avant le dispositif de refroidissement (16) et/ou est situé après la dernière cage de laminoir (14) et après le dispositif de refroidissement (16).

2. Installation de laminage de coulée continue selon la revendication 1,
**caractérisée en ce que** le composant de réglage de température (18) est un dispositif de chauffage (20).

3. Installation de laminage de coulée continue selon la revendication 2,
**caractérisée en ce que** le dispositif de chauffage (20) comprend un four à induction (22).

4. Installation de laminage de coulée continue selon l'une quelconque des revendications précédentes,
**caractérisée en ce que** le composant de réglage de température (18) comprend un dispositif accumulateur de chaleur (24).

5. Installation de laminage de coulée continue selon la revendication 4,
**caractérisée en ce que** le dispositif accumulateur de chaleur (24) comprend au moins un panneau (26), notamment un panneau pivotant (26).

6. Installation de laminage de coulée continue selon l'une quelconque des revendications précédentes,
**caractérisée en ce que** le composant de réglage de température (18) est situé à une distance comprise entre 1 mètre et 25 mètres, de préférence entre 5 mètres et 20 mètres et, particulièrement préférablement, entre 10 mètres et 15 mètres avant le dispositif de refroidissement (16).

7. Installation de laminage de coulée continue selon l'une quelconque des revendications précédentes,
**caractérisée en ce que** le composant de réglage de température (18) est situé à une distance comprise entre 0,5 mètre et 10 mètres, de préférence entre 0,5 mètre et 5 mètres et, particulièrement préférablement, entre 0,5 mètre et 2 mètres après la dernière cage de laminoir (14).

8. Installation de laminage de coulée continue selon l'une quelconque des revendications précédentes,
**caractérisée en ce que** le dispositif de refroidissement (16) est un dispositif de refroidissement laminaire ou turbo-laminaire (16) ou un dispositif de refroidissement sous pression (16).

9. Procédé de traitement d'une pièce à travailler (28) dans une installation de laminage de coulée (10) selon au moins une des revendications 1 à 8,
**caractérisé en ce que** le traitement de la pièce à travailler (28) fait intervenir le composant de réglage de température (18).

10. Procédé selon la revendication 9,
**caractérisé en ce que** le composant de réglage de température (18) est situé après la dernière cage de laminoir (14) et avant le dispositif de refroidissement (16) et le traitement de la pièce à travailler (28) fait intervenir le composant de réglage de température (18).

11. Procédé selon la revendication 9 ou 10,
**caractérisé en ce que** le composant de réglage de température (18) est situé après la dernière cage de laminoir (14) et après le dispositif de refroidissement (16) et le traitement de la pièce à travailler (28) fait intervenir le composant de réglage de température (18).

12. Procédé selon l'une quelconque des revendications 9 à 11, **caractérisé en ce que** le composant de réglage de température (18) est un dispositif de chauffage (20) et une augmentation de température comprise entre 10°C et 150°C, de préférence entre 20°C et 120°C et, particulièrement préférablement, entre 50°C et 100°C est appliquée à la pièce à travailler (28) à l'aide du dispositif de chauffage (20).

13. Procédé selon l'une quelconque des revendications 9 à 12, **caractérisé en ce que** le composant de réglage de température (18) est un dispositif de chauffage (20) et la pièce à travailler (28) est chauffée pendant une durée comprise entre 0,1 seconde et 10 secondes, de préférence entre 0,1 seconde et 5 secondes et, particulièrement préférablement, entre 0,1 seconde et 1 seconde à l'aide du dispositif de chauffage (20).
